## Europäisches Patentamt

## European Patent Office

## Office européen des brevets

(11) Veröffentlichungsnummer: **0 217 175**
**B1**

(12) # EUROPÄISCHE PATENTSCHRIFT

(45) Veröffentlichungstag der Patentschrift:
24.05.89

(51) Int. Cl.⁴: **B 60 R 22/26**, B 60 R 22/46

(21) Anmeldenummer: **86112357.8**

(22) Anmeldetag: **06.09.86**

(54) Sitzintegriertes Sicherheitsgurtsystem.

(30) Priorität: **11.09.85 DE 3532407**

(43) Veröffentlichungstag der Anmeldung:
**08.04.87 Patentblatt 87/15**

(45) Bekanntmachung des Hinweises auf die Patenterteilung:
**24.05.89 Patentblatt 89/21**

(84) Benannte Vertragsstaaten:
**DE FR GB IT SE**

(56) Entgegenhaltungen:
**EP-A- 0 186 880**
**DE-A- 2 223 207**
**DE-A- 2 345 847**
**DE-A- 2 747 398**
**DE-A- 3 343 325**
**FR-A- 2 180 151**
**FR-A- 2 286 730**
**FR-A- 2 387 823**
**FR-A- 2 417 989**
**US-A- 4 006 934**

(73) Patentinhaber: **Autoflug GmbH & Co Fahrzeugtechnik,**
**Industriestrasse 10 Postfach 1180,**
**D-2084 Rellingen 2 (DE)**

(72) Erfinder: **Sedlmayr, Gerhard, Dr., Königgrätzstrasse 1,**
**D-2000 Hamburg 52 (DE)**
Erfinder: **Grassmuck, Jürgen, Dipl.-Ing.,**
**Oeltingsallee 27, D-2080 Pinneberg (DE)**
Erfinder: **Borutta-Mensing, Werner, Ing., Meisenweg 26,**
**D-2200 Elmshorn (DE)**

(74) Vertreter: **Müller, Karl-Ernst, Dr. et al, Patentanwälte**
**Becker, Müller & Pust Eisenhüttenstrasse 2,**
**D-4030 Ratingen 1 (DE)**

ACTORUM AG

## Beschreibung

Die Erfindung betrifft ein Sicherheitsgurtsystem, insbesondere für Kraftfahrzeuge, mit einem am Fahrzeugsitz gehaltenen Beckengurt, der mit einem Gurtschloßteil versehen ist, welches mit einem anderen, an einem kraftaufnehmend gehaltenen Verankerungsteil sitzenden Gurtschloßteil zusammenwirkt, und mit einem Schultergurt als Fortsetzung des Beckengurtes nach dessen Umlenkung am Gurtschloß, der unter Einschaltung eines Gurtaufrollers mit einem fahrzeugfesten Teil verbunden ist. Damit gilt die Erfindung gleichermaßen für Sicherheitsgurtsysteme, bei denen das Verankerungsteil zur unmittelbaren Kraft-einleitung an einem fahrzeugfesten Teil angeschlagen ist, wie auch für solche Sicherheitsgurtsysteme, bei denen das Verankerungsteil am Sitz befestigt ist und so die Krafteinleitung in ein fahrzeugfestes Teil über die Sitzbefestigung geschieht.

Ein gattungsgemäßes Sicherheitsgurtsystem ist aus der DE-OS 3 437 364 bekannt. Bei dem dort beschriebenen Sicherheitsgurtsystem ist zusätzlich zu dem an der B-Säule als fahrzeugfestem Teil befestigten Gurtaufroller für den Schultergurt ein am Fahrzeugsitz gehaltener Beckengurtaufroller angeordnet, wobei Schultergurt und Beckengurt einen kontinuierlichen Gurt darstellen, an dem das eine Gurtschloßteil mittels einer Schnalleneinrichtung so gleitet, daß beim Anlegen des Gurtsystems Gurtband nur aus dem Beckengurtaufroller abgezogen wird.

Dem bekannten Sicherheitsgurtsystem ist der Nachteil zu eigen, daß durch Filmspulen- und Submarining-Effekt eine im Einzelfall so große Gurtlänge vom Gurtsystem freigegeben wird, daß ein sicheres Fernhalten der angeschnallten Person von den Fahrzeugteilen nicht in jedem Fall gewährleistet ist. Dieser Submarining-Effekt tritt ein, wenn die angeschnallte Person bei nicht ausreichend stramm anliegendem Beckengurt im Unfallgeschehen aufgrund der Fahrzeugverzögerung nachgibt und nach vorne unter den Beckengurt rutscht. Dadurch nimmt der Beckengurt eine ungünstige Lage ein, indem er in den Abdomenbereich des menschlichen Körpers einschneidet und dabei erhebliche Verletzungen hervorrufen kann.

In diesem Zusammenhang ist es zwar bekannt, Strammvorrichtungen zur Strammung des Schultergurtes vorzusehen, womit jedoch das Problem verbunden ist, daß der Beckengurt erst nach Abschluß der Strammung des Schultergurtes gestrafft werden kann, wobei die zur Verfügung stehende Strammkraft durch die erhebliche Reibung des Gurtbandes am Körper der angeschnallten Person sowie durch die Umlenkung des Gurtbandes am Gurtschloß vermindert wird.

Ein weiterer Nachteil des bekannten Gurtsystems besteht in der meist wenig den Körpermaßen des angeschnallten Insassen angepaßten Gurtgeometrie, was insbesondere für Fahrzeuge gilt, bei denen die B-Säule relativ weit vorn angeordnet ist und in denen sich die Sitzstellung für größere Personen sodann auf gleicher Höhe mit oder hinter der B-Säule befindet. In diesen Fällen liegt das Gurtband nicht auf dem Schlüsselbein auf, sondern berührt den Oberkörper erst im Brustbereich, so daß eine Rückhaltung des Oberkörpers erst nach einer relativ großen Vorwärtsverlagerung erfolgt und die Gefahr besteht, daß sich der Oberkörper des angeschnallten Insassen im Unfallgeschehen aus dem Gurt herausdreht.

Es ist zwar weiterhin beispielsweise aus der DE-OS 2 025 962 bekannt, das Sicherheitsgurtsystem vollständig am Fahrzeugsitz anzuordnen, indem alle Befestigungspunkte für den Dreipunkt-Sicherheitsgurt mit dem Sitz verbunden sind, jedoch ist mit dieser Lösung der Nachteil verbunden, daß im Unfallgeschehen sämtliche auftretenden Kräfte vom Sitz selbst aufgenommen und über den Sitzträger in die Fahrzeugkarosserie abgeleitet werden müssen. Weiterhin bereiten die Anpassungen der Gurtgeometrie an die Körpermaße der anzuschnallenden Personen bei sitzintegrierten Sicherheitsgurten Probleme, und auch der Filmspulen- und Submarining-Effekt ist nicht vermieden.

Der Erfindung liegt daher die Aufgabe zugrunde, ein gattungsgemäßes Sicherheitsgurtsystem derart zu verbessern, daß unter Beibehaltung der Einleitung der im Unfallgeschehen auftretenden Kräfte über das Sicherheitsgurtsystem selbst in die Kraftfahrzeugkarosserie das System so ausgestaltet werden kann, daß bei einer verbesserten und den Körpermaßen der angeschnallten Personen anzupassenden Gurtgeometrie eine sichere Rückhaltung unter weitgehender Vermeidung des Filmspulen- und Submarining-Effektes gewährleistet ist.

Die Lösung dieser Aufgabe ergibt sich einschließlich vorteilhafter Ausgestaltungen und Weiterbildungen aus dem Inhalt der Patentansprüche, welche dieser Beschreibung folgen.

Mit der Erfindung ist der Vorteil verbunden, daß das Sicherheitsgurtsystem als solches an wenigstens zwei Punkten, im Bereich des Gurtschlosses (Verankerungsteil) sowie im Bereich des oberen Umlenk- oder Befestigungsbeschlages des Schultergurtes, unmittelbar bzw. mittelbar mit der Fahrzeugkarosserie verbunden ist, so daß die im Unfallgeschehen auftretenden Kräfte zum größten Teil in die Fahrzeugkarosserie abgeleitet werden, wobei jedoch gleichzeitig durch den am Fahrzeugsitz geführten Halte- oder Führungsgurt bzw. durch den Schultergurt selbst ein Gurtring geschaffen wird, der die auf dem Fahrzeugsitz befindliche Person umschließt und dessen Umfang mittels einer Strammvorrichtung einengbar ist. So ist gewährleistet, daß einerseits eine bessere Gurtgeometrie herrscht und daß andererseits durch die gleichzeitige allseitige Einkürzung des Umfanges des die Person rückhaltenden Gurtringes die überschüssige Gurtlänge mit der erforderlichen Sicherheit beseitigt wird.

Nach mehreren bevorzugten Ausführungsbeispielen der Erfindung ist vorgesehen, die Strammvorrichtung in dem Gurtring fliegend anzuordnen mit der Folge, daß je nach der herrschenden Gurtlose bzw. dem sich daraus ergebenden Widerstand der Teil des Gurtringes eingezogen, d.h. gestrammt wird, der den geringsten Widerstand aufweist, sei dies nun der Beckengurt oder aber der Schultergurt unmittelbar oder über den an ihm angreifenden Halte- und Führungsgurt. Die fliegend gelagerte Stramm- bzw. Einzugsvorrichtung wird sich dabei so lange in der einen oder anderen Richtung bewegen, bis im Gurtring ein Kräftegleichgewicht herrscht. Erfindungsgemäß kann die Gurtstrammung dabei entweder durch pyrotechnische Antriebe oder aber mittels mechanischer Antriebe herbeigeführt werden.

In der Zeichnung sind Ausführungsbeispiele der Erfindung wiedergegeben, welche nachstehend beschrieben sind. Es zeigen:

Fig. 1 einen Fahrzeugsitz mit einem ungestrammten Sicherheitsgurtsystem in einer Ansicht,

Fig. 2 das Sicherheitsgurtsystem gemäß Figur 1 in gestrammtem Zustand,

Fig. 3 das Sicherheitsgurtsystem gemäß Figuren 1 und 2 mit einem anderen Strammantrieb,

Fig. 4 das Sicherheitsgurtsystem gemäß Figuren 1 und 2 mit einer linear gekuppelten Strammvorrichtung,

Fig. 5 den Fahrzeugsitz mit einer anderen Ausführungsform des Sicherheitsgurtsystems,

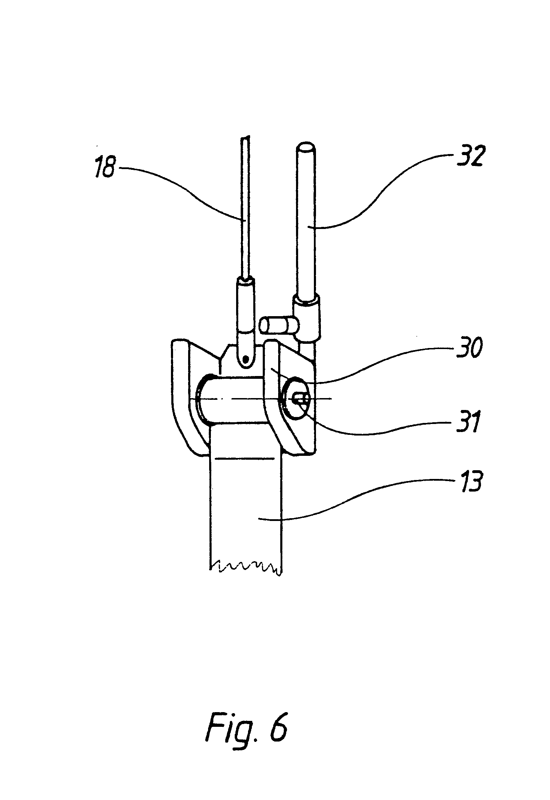

Fig. 6 einen vergrößerten Ausschnitt aus Figur 5,

Fig. 7 den Fahrzeugsitz mit einer weiteren Ausführungsform des Sicherheitsgurtsystems,

Fig. 8 das Sicherheitsgurtsystem gemäß Figur 7 in einer schematischen Darstellung,

Fig. 9 eine ausschnittsweise Vergrößerung aus Figur 8,

Fig. 10 das Sicherheitsgurtsystem gemäß Figur 7 in einer anderen Ausführungsform,

Fig. 11 eine kopfstützenintegrierte Höhenverstellung im Sicherheitsgurtsystem,

Fig. 12 ein Ausführungsbeispiel der Höhenverstellung gemäß Figur 11.

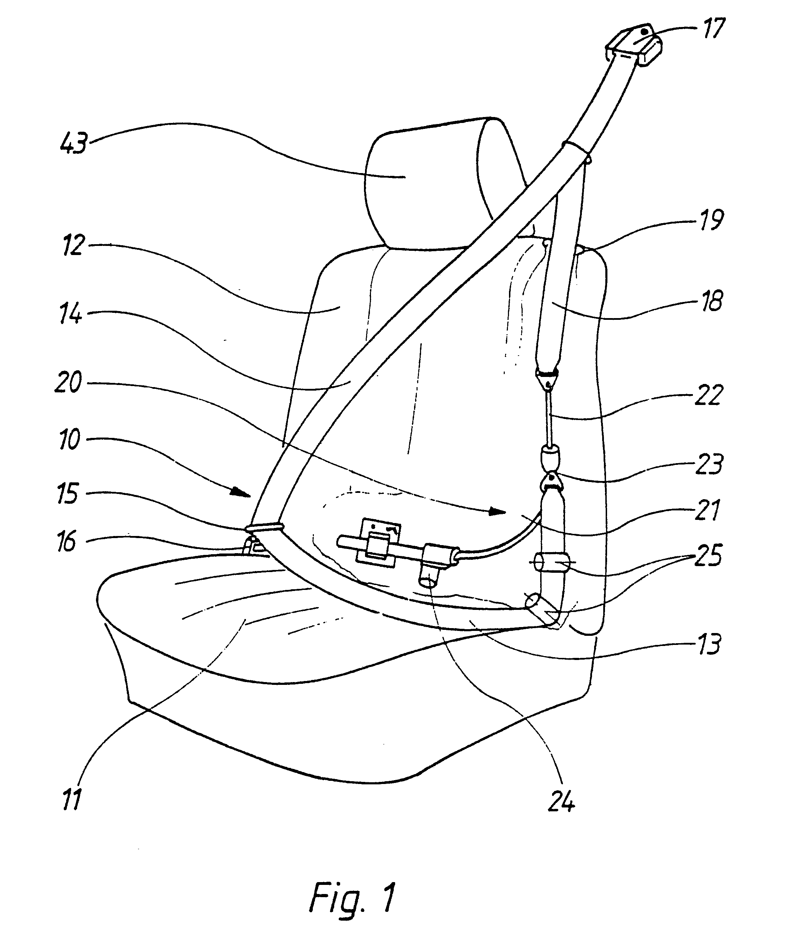

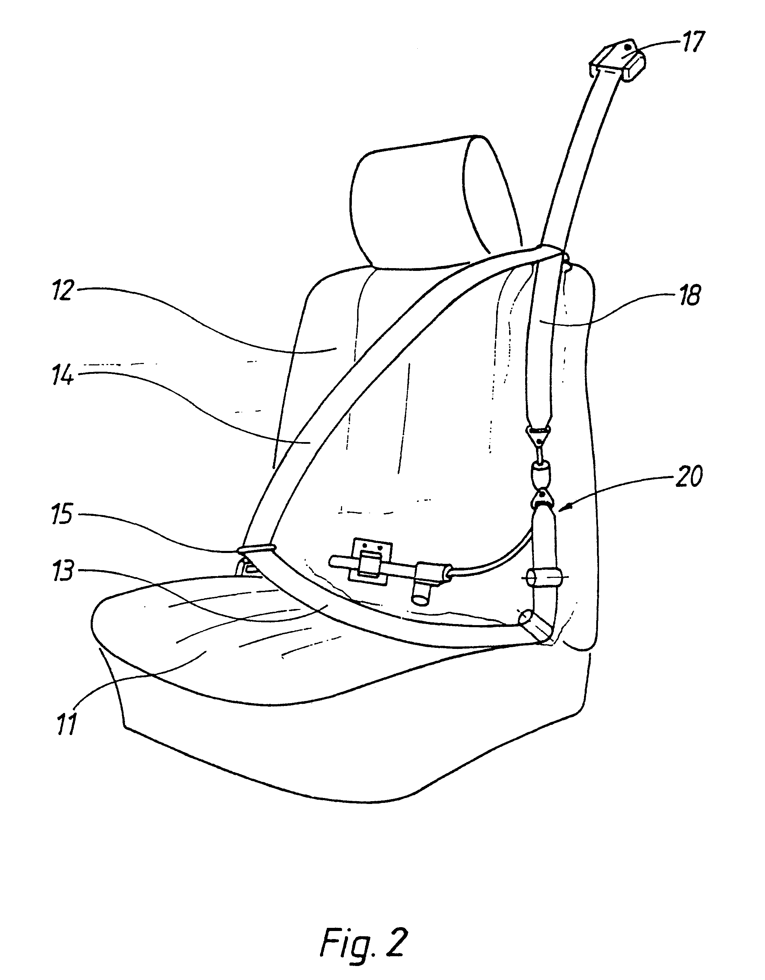

In den Figuren 1-4 ist ein erstes Ausführungsbeispiel der Erfindung mit verschiedenen Strammvorrichtungen dargestellt. Das Sicherheitsgurtsystem ist an einem Fahrzeugsitz 10, bestehend aus einem Sitzkissen 11 und einer Rückenlehne 12, angeordnet und setzt sich im wesentlichen aus einem Beckengurt 13 und einem Schultergurt 14 zusammen. An der in Fahrtrichtung gesehen rechter Seite ist ein den Beckengurt 13 zum Schultergurt 14 umlenkendes Gurtschloß 15 angeordnet, welches über ein Verankerungsteil 16 mit einem fahrzeugfesten Teil, vorzugsweise dem Fahrzeugboden, verbunden ist.

Das obere freie Ende des Schultergurtes 14 ist ausziehbar auf einem selbstsperrenden Schultergurtaufroller 17 aufgewickelt, der über bekannte gurtband- und fahrzeugsensitive Sperrsysteme verfügt und der an einem fahrzeugfesten Teil, bevorzugt am Dachholm des Kraftfahrzeuges oder aber auch in der an sich bekannten Weise an der B-Säule befestigt ist.

Im Bereich des oberen Endes der Rückenlehne 12 greift an dem Schultergurt 14 ein Halte- oder Führungsgurt 18 längsverschiebbar an, der über eine Öffnung 19 in das Innere der Rückenlehne 12 geführt und hier mit einer Strammvorrichtung 20 verbunden ist. Die Strammvorrichtung besteht im einzelnen aus einem Bowdenkabel 21 mit einer Bowdenseele 22 und einer Umhüllung 23, wobei das eine Ende der Bowdenseele 22 mit einer pyrotechnisch angetriebenen Kolben-Zylinder-Einheit verbunden ist. Das andere Ende der Bowdenseele 22 ist mit dem Halte- oder Führungsgurt 18 verbunden, während über eine geeignete Koppelung der Beckengurt 13 an der Bowdenhülle 23 unverschieblich angreift. Hierzu ist der Beckengurt 13 über Umlenkelemente 25 in die Gurtverlaufsrichtung des Halte- oder Führungsgurtes 18 gebracht.

Zu Beginn eines Unfalls wird von einem nicht dargestellten Fahrzeugsensor die pyrotechnische Antriebseinheit 24 ausgelöst und der Gurtaufroller blockiert, wobei der mit der Bowdenseele 22 verbundene Kolben der Antriebseinheit 24 eine Zugkraft auf dieselbe ausübt. Infolge der relativ zueinander beweglichen Teile der Strammvorrichtung 20, nämlich Bowdenseele 22 und Bowdenhülle 23, erfolgt eine Bewegung der Enden von Beckengurt 13 und Halte- oder Führungsgurt 18 aufeinander zu, wobei die Längsbewegung des Halte- oder Führungsgurtes 18 infolge seiner Verbindung mit dem Schultergurt 14 in eine Strammung desselben umgesetzt wird, da die Blockierung des Schultergurtaufrollers 17 einen weiteren Gurtauszug des Schultergurtes 14 verhindert. Infolge der fliegenden Anordnung wird die Seite des von Beckengurt 13, Schultergurt 14 sowie Halte- oder Führungsgurt 18 gebildeten Gurtringes zuerst gestrammt, welche die größte Gurtlose aufweist, bis sich im Gurtring ein Kräftegleichgewicht eingestellt hat. Das Ende der Strammbewegung ergibt sich aus dem möglichen Weg bzw. der maximalen Strammkraft. Die im Anschluß an die Strammung auftretenden Haltekräfte werden nun über das Schloß 15 bzw. Verankerungsteil 16 und die Befestigung des Schultergurtaufrollers 17 direkt in die Fahrzeugkarosserie und vom in Fahrtrichtung linken Beckengurtbefestigungspunkt über den Sitz in die Kfz-Karosserie abgeleitet.

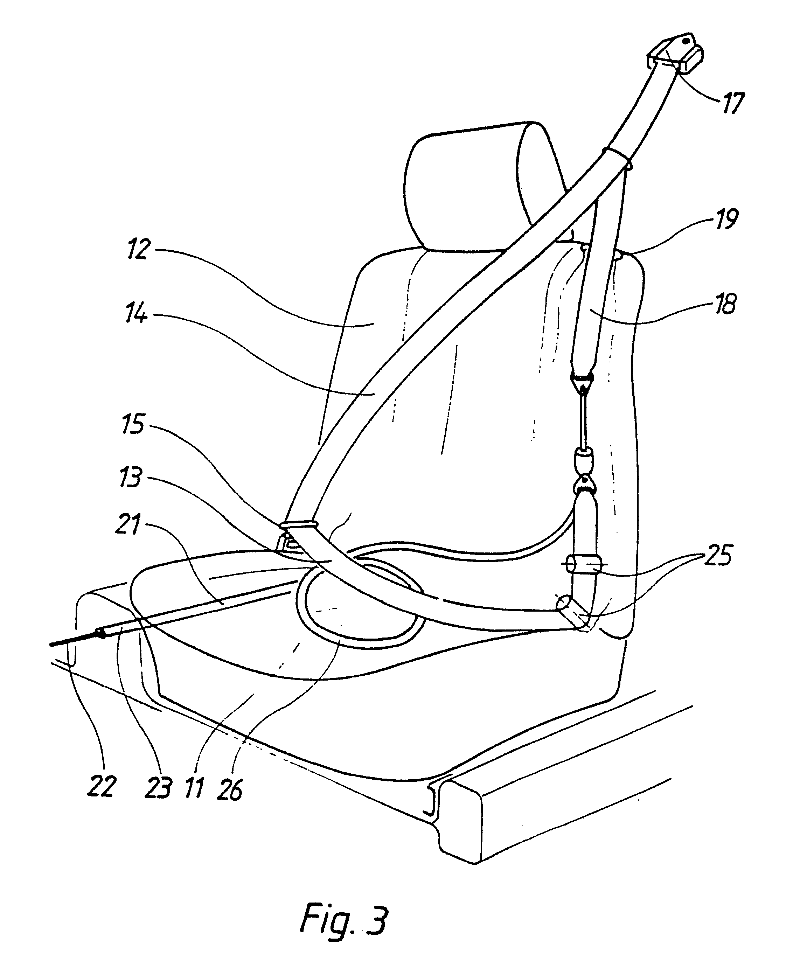

Wie sich aus Figur 3 andeutungsweise ergibt, kann statt der pyrotechnischen Antriebsvorrichtung eine andere, mechanische Antriebsvorrichtung für die Bowdenseele 22 gewählt sein, indem diese beispielsweise mit im Unfallgeschehen beweglichen Fahrzeugteilen oder sonstigen Kraftspeichern verbunden ist, die dann die erzeugte bzw. vorher gespeicherte Energie in eine Zugbewegung an der Bowdenseele 22 umsetzen. Zum Ausgleich von Längenänderungen des Bowdenkabels 21 bei Verschiebungen des Fahrzeugsitzes 10 ist das Bowdenkabel 21 im Bereich des Sitzkissens 11 zu einer Ausgleichschlinge 26 geformt.

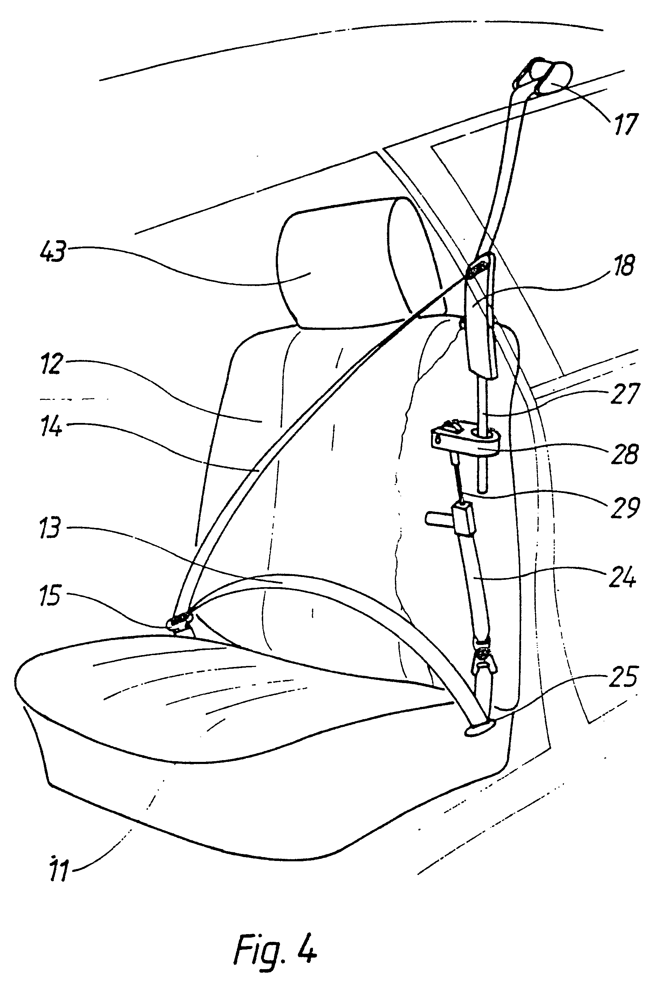

In Figur 4 schließlich ist in Abweichung von der Ausführung gemäß den Figuren 1-3 die Strammvorrichtung 20 als Linearstrammer direkt zwischen den Endpunkten von Becken- und Halte- oder Führungsgurt angeordnet, indem der Halte- oder Führungsgurt 18 mit einer Klemmstange 27 verbunden ist, welche über ein Kuppungselement 28 mit der Kolbenstange 29 der nun in der Ebene der zu strammenden Gurte angeordneten pyrotechnischen Kolben-Zylinder-Einheit 24 verkoppelt ist. Bei Auslösung der Strammvorrichtung bewirkt die hohe Anfangsbeschleunigung ein Verkanten von Klemmstange 27 und Kolbenstange 29 mit dem Kupplungselement 28, wodurch eine die Strammbewegung übertragende Verbindung hergestellt ist.

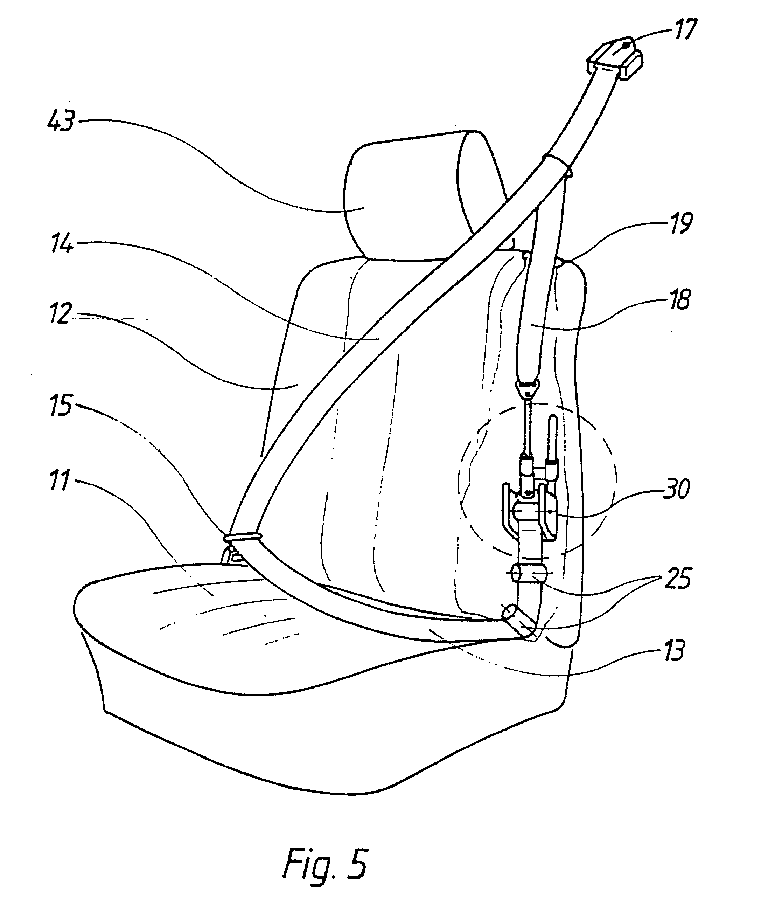

In Figur 5 ist das vorstehend beschriebene Ausführungsbeispiel derart abgewandelt, daß das frei Ende des Beckengurtes 13 in einem mit einem fahrzeugsensitiven und einem gurtbandsensitiven Sperrsystem ausgerüsteten Beckenaufroller 30 ausziehbar aufgewickelt ist. Der Beckengurtaufroller 30 ist fest mit dem Halte- oder Führungsgurt 18 verbunden und in der Rückenlehne 12 des Sitzes 10 zwischen den Gurtteilen 13, 18 fliegend, d.h. in Gurtverlaufsrichtung frei verschieblich angeordnet. Der Beckengurtaufroller 30 weist ferner eine auf seine Welle 31 wirkende Strammvorrichtung 32 einer bekannten Bauart auf.

Im Unfallgeschehen findet nun ähnlich wie beim Ausführungsbeispiel gemäß Figuren 1-4 durch die Strammvorrichtung 32 des Beckengurtaufrollers 30 eine Verkürzung des beschriebenen Gurtringes statt, indem die Strammvorrichtung 32 die Welle des Beckengurtaufrollers 30 dreht. Je nachdem an welcher Stelle des Sicherheitsgurtsystems, also am Beckengurt 13 oder am Halte- oder Führungsgurt 18 bzw. Schultergurt 14, der Widerstand kleiner, d.h. die dort herrschende Gurtlose größer ist, erfolgt zunächst entweder eine Aufwickelbewegung des Beckengurtes 13 auf der Gurtaufwickelwelle 31 des Beckengurtaufrollers 30 oder aber die Zugkraft sucht sich am Halte- oder Führungsgurt 18 abzustützen. Eine derart ausgeübte Zugkraft führt zur Verschiebung des Beckengurtaufrollers 30, so daß eine Strammbewegung sowohl durch den Einzug des Gurtbandes wie auch durch die Bewegung des Gurtaufrollers erfolgt. Dieser Bewegungsablauf vollzieht sich bis ein Kräftegleichgewicht im Gurtring erreicht ist.

Mit diesem Ausführungsbeispiel ist unter anderem noch der besondere Vorteil verbunden, daß in Abstimmung des Anschnallvorganges der Schultergurtaufroller 17 und der Beckengurtaufroller 30 eine unterschiedliche Wickelkapazität aufweisen können, wodurch das Auszugs- wie auch Einzugsverhalten der Gurtaufroller optimierbar ist. Weiterhin befindet sich bei abgelegtem Sicherheitsgurt die am Beckengurt 13 angeordnete Schloßzunge in einer ergonomisch günstigen Position, nämlich auf dem Sitzkissen 11 im Bereich der Umlenkelemente 25. Vorteilhaft ist weiterhin, daß beim Anlegen des Sicherheitsgurtes aufgrund der Freigabe an Gurtband aus dem Beckengurtaufroller 30 nur eine geringe Länge an Gurtband durch die Schloßzungenumlenkung hindurchgezogen werden muß.

Nach einem Ausführungsbeispiel der Erfindung kann auch vorgesehen sein, anstelle des einen größeren Komfort bietenden Beckengurtaufrollers eine einfache Rolle vorzusehen, an der das sitzseitige Ende des Beckengurtes angeschlagen ist, so daß sich im Normalbetrieb des Sicherheitsgurtsystems eine unnachgiebige Halterung des Beckengurtes ergibt. Die Rolle ist dann in gleicher Weise wie der Beckengurtaufroller mit einer Strammvorrichtung verbunden, so daß im Auslösefall die Aufwickelbewegung des Beckengurtes an der Rolle mit Verkürzung des Gurtringes eintritt.

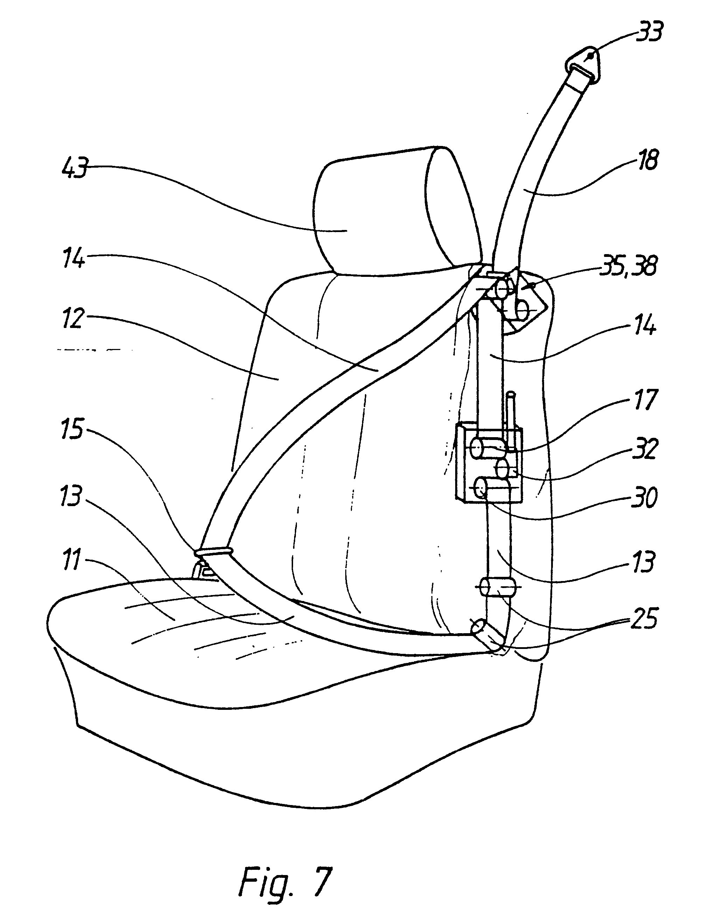

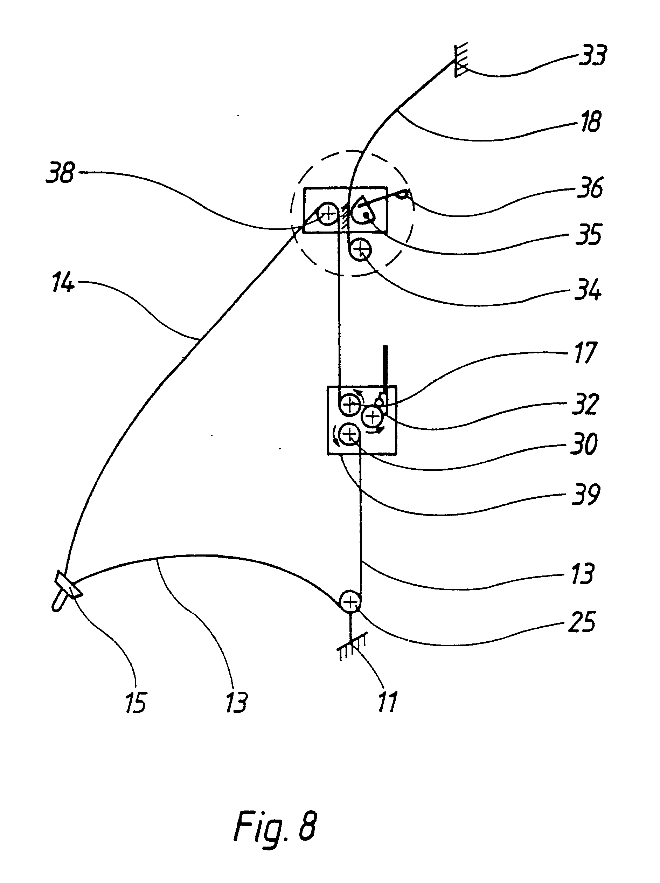

Ein weiteres Ausführungsbeispiel der Erfindung ist in den Figuren 7-9 dargestellt. Hierbei ist der Schultergurt 14 ausschließlich am Sitz 10 angeordnet, indem auch der Schultergurtaufroller 17 in der Rückenlehne 12 des Sitzes 10 gehaltert ist. Die Verbindung des Sicherheitsgurtsystems zu einem fahrzeugfesten Teil wird durch den Halte- oder Führungsgurt 18 hergestellt, welcher nun einerseits mit der Rückenlehne 12 verkoppelt und andererseits mit einem fahrzeugfesten Teil über einen Beschlag 33 fest verbunden ist. Genauen Aufschluß hierüber gibt insbesondere die schematische Darstellung des erfindungsgemäßen Sicherheitsgurtsystems in Figur 8. Durch diese Anordnung ergibt sich der Vorteil, daß die Gurtgeometrie von vornherein optimal gestaltet ist und nicht erst durch den Strammvorgang der Schultergurt in die vorgesehene optimale Stellung gebracht werden muß.

Im Hinblick darauf, daß die Rückenlehne 12 klappbar ausgebildet bzw. der ganze Sitz 10 bezüglich der Lage des Beschlages 33 verschiebbar sein muß, ist der Halte- oder Führungsgurt 18 ebenfalls auf einem Längenänderungen des Gurtbandes 18 ausgleichenden einfachen Gurtaufroller 34 ohne Sperrsysteme aufgewickelt, der lediglich als Gurtspeicher dient. Die Verbindung des Gurtes 18 zum Sitz 10 wird hergestellt durch eine das Gurtband des Halte- oder Führungsgurtes 18 ständig einklemmende Klemmvorrichtung 35, welche über eine Handhabe 36 außer Eingriff mit dem Gurtabschnitt zu bringen ist. Soll eine Bewegung der Rückenlehne 12 bzw. des Sitzes 10 vorgenommen werden, so ist vorher über die Handhabe 36 die Klemmvorrichtung 35 zu lösen, damit die Rückenlehne 12 gegenüber dem Halte- oder Führungsgurt 18 beweglich ist. Die Handhabe 36 kann dabei mit der Rückenlehnen- oder Sitzverstellung gekoppelt sein.

Anstelle der ständig eingreifenden Klemmvorrichtung kann auch eine erst im Auslösefall durch eine pyrotechnische Einheit schließende Klemmvorrichtung vorgesehen sein, wobei die Klemmwirkung der Klemmvorrichtung vorzugsweise gemeinsam mit der Auslösung der Strammvorrichtung ausgelöst wird.

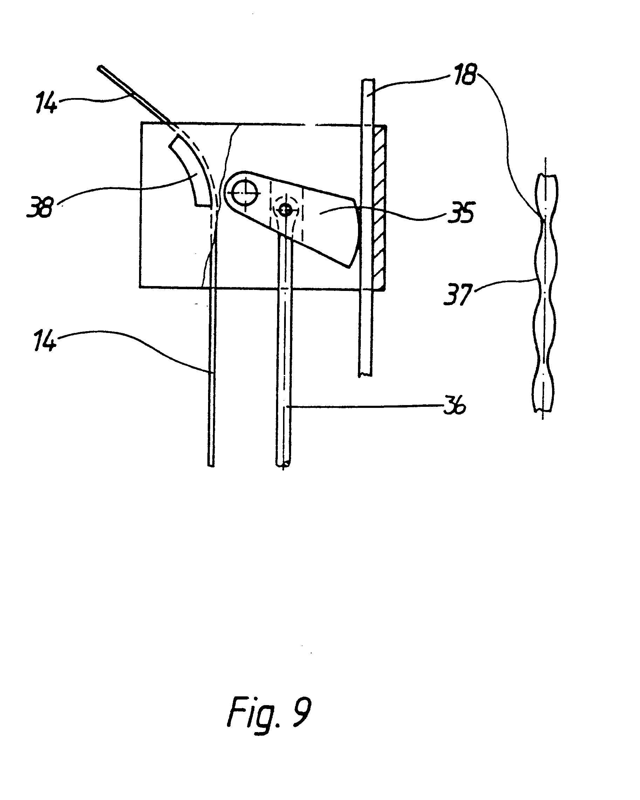

Alternativ dazu kann gemäß Figur 9 vorgesehen sein, daß auf den Gurtaufroller 34 verzichtet werden kann, indem der Halte- oder Führungsgurt 18 aus einem federnden und so steifen Material gefertigt ist, daß der Gurt 18 in die Rückenlehne 12 oder aber an Stelle des Beschlages 33 in den Dachholm einschiebbar ist. Zur Verbesserung der Klemmwirkung kann dabei das Gurtband des Halte- oder Führungsgurtes 18 eine besonders ausgeführte Oberfläche 37 aufweisen, deren Form der Ausbildung der Klemmbacken 35 entspricht, so daß sich bei Klemmung zusätzlich zum auftretenden Kraftschluß ein die Klemmwirkung verbessernder Formschluß ergibt.

Zur Verbesserung der Sichtverhältnisse im Kraftfahrzeug kann ferner vorgesehen sein, den Halteund Führungsgurt möglichst schmal auszubilden oder ihn aus durchscheinendem Material zu fertigen oder ihn mit Durchsichtöffnungen zu versehen.

Im Hinblick auf die Rückhaltefunktion des Sicherheitsgurtsystems entsprechend dem beschriebenen Ausführungsbeispiel gemäß den Figuren 7-9 ist vorgesehen, den Schultergurt 14 am oberen Ende der Rückenlehne 12 über eine Umlenkrolle 38 zu dem in der Rückenlehne 12 angeordneten Schultergurtaufroller 17 zu führen. Dabei können die Umlenkrolle 38 und die Klemmvorrichtung 35 aus Platzgründen zweckmäßig zu einer Baueinheit zusammengefaßt sein. Weiterhin ist es besonders zweckmäßig, die nun gemeinsam in einer Gurtbandebene angeordneten Schultergurtaufroller 17 und Beckengurtaufroller 30 zu einer Baueinheit 39 zusammenzufassen, was insofern vorteilhaft ist, als nun ein einziges, gemeinsames Sperrsystem beide Gurtaufroller 17, 30 steuern und die erforderliche Strammvorrichtung 32 nun auch auf beide Wellen 31 der Gurtaufroller 17, 30 einwirken kann. Da die gemeinsame Baueinheit 39 von Schultergurtaufroller 17 und Beckengurtaufroller 30 selbst zwischen den betreffenden Gurtabschnitten von Beckengurt 13 und Schultergurt 14 fliegend, d.h. in der Gurtbandebene verschieblich angeordnet ist, ergibt sich ein ähnlicher Funktionsablauf wie zu dem Ausführungsbeispiel gemäß Figur 5 beschrieben. Ebenso kann anstelle des Beckengurtaufrollers auch im vorliegenden Ausführungsbeispiel wiederum eine einfache, einer Strammbewegung zugängliche Rolle vorgesehen sein.

Bei Auslösung der Strammvorrichtung 32 durch den fahrzeugseitigen Sensor wirkt diese auf beide Gurtaufroller 17, 30 ein. Je nachdem auf welcher Seite nun der geringere Widerstand herrscht, erfolgt ein Einziehen des Beckengurtes 13 oder des Schultergurtes 14 in den betreffenden Gurtaufroller 17, 30 bei gleichzeitiger Lageverschiebung der Baueinheit 39, bis in dem Gurtring ein Kräftegleichgewicht errichtet ist. Aufgrund der Selbstsperrung der Gurtaufroller 17, 30 verbleibt das Sicherheitsgurtsystem in der gestrafften Lage gesperrt, so daß eine sichere Rückhaltung der angeschnallten Person gewährleistet ist.

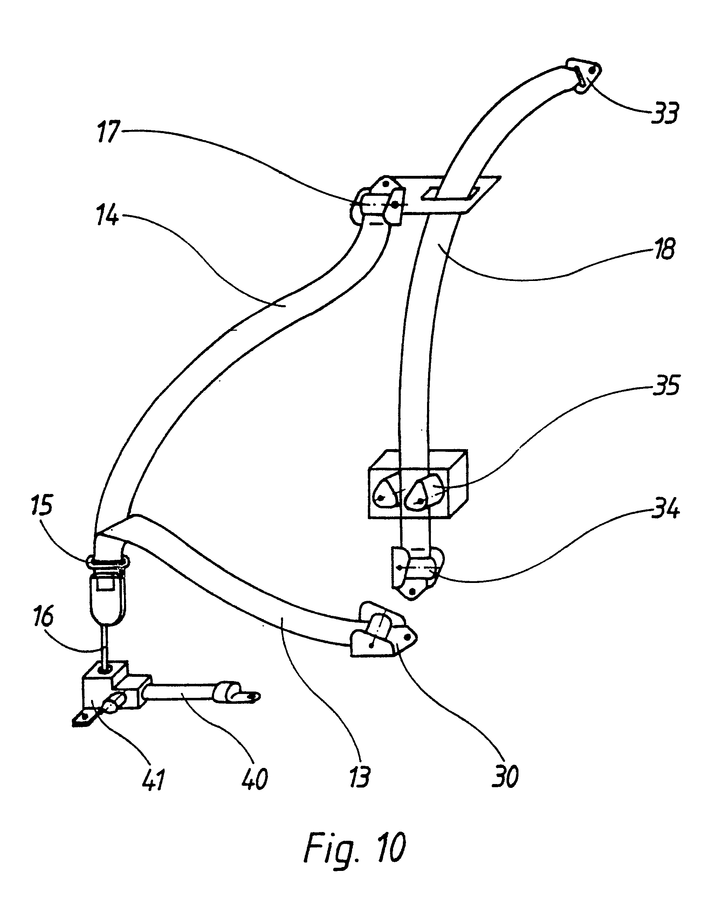

In einer Abwandlung des vorstehend beschriebenen Ausführungsbeispiels kann gemäß Figur 10 vorgesehen sein, die Gurtaufroller 17, 30 beispielsweise aus Platzgründen getrennt anzuordnen und die im Gurtring notwendige Strammvorrichtung auf das Gurtschloß 15 einwirken zu lassen, indem eine pyrotechnisch angetriebene Kolben-Zylinder-Einheit 40 am Verankerungsteil 16 angreift und dieses über einen Umlenkblock 41 strammt.

Auf diese Weise wird das nun von Anfang an höher über dem Sitzkissen 11 und damit im Hinblick auf den Anlegekomfort von vornherein günstiger angeordnete Schloß 15 in Richtung auf den Fahrzeugboden bis zum Anschlag auf der Umlenkvorrichtung 41 gezogen. Somit werden Schultergurt 14 und Beckengurt 13 gleichzeitig gestrammt, wobei sich aufgrund der geschlauften Umlenkung des Gurtbandes am Gurtschloß 15 auch hier eine unterschiedliche Strammung des Gurtbandes je nach dem herrschenden Widerstand bis zum Einstellen eines Kräftegleichgewichtes ergibt. Bei diesem Ausführungsbeispiel kann zweckmäßig sein, den Schultergurtaufroller 17 gemeinsam mit der Klemmvorrichtung 35 in einer Einheit zusammenzufassen.

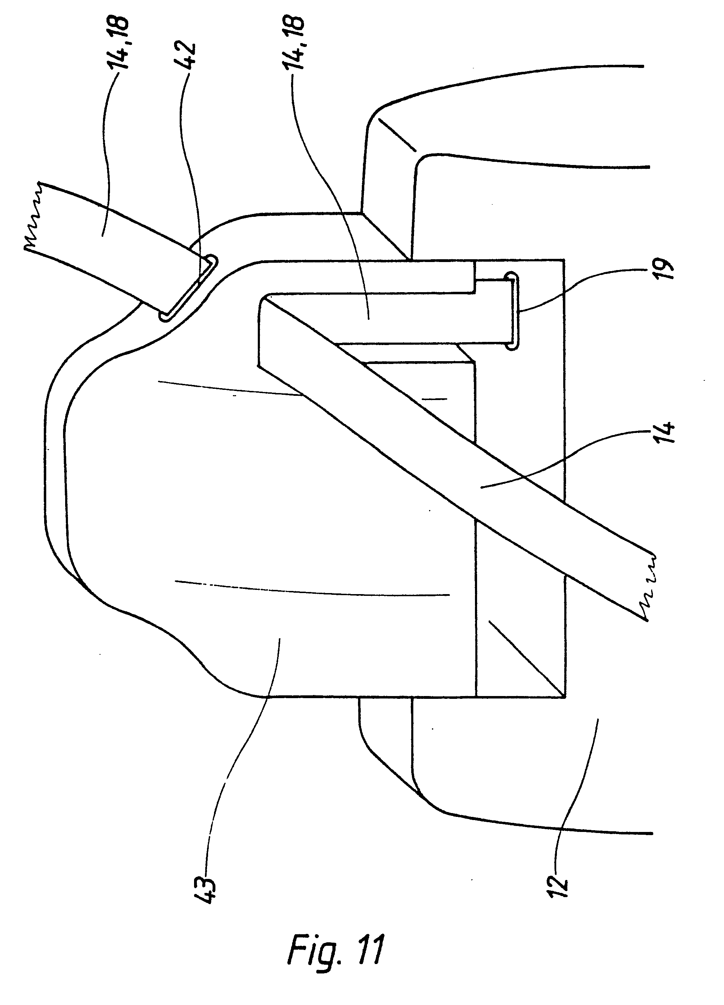

Schließlich ist es zweckmäßig, den oberen Führungsgurt für den Schultergurt 14 und den Halte- oder Führungsgurt 18 am Sitz höhenverstellbar anzuordnen, damit eine bestmögliche Gurtgeometrie für alle infrage kommenden Personen gewährleistet ist. Hierzu ist vorgesehen, die erforderliche Gurtführung 42 gemeinsam mit der Kopfstütze 43 des Sitzes 10 höhenverstellbar zu halten, wobei die Gurtführung 42 im Bereich der Kopfstütze 43 eine Sollbruchstelle aufweisen muß (Figur 11).

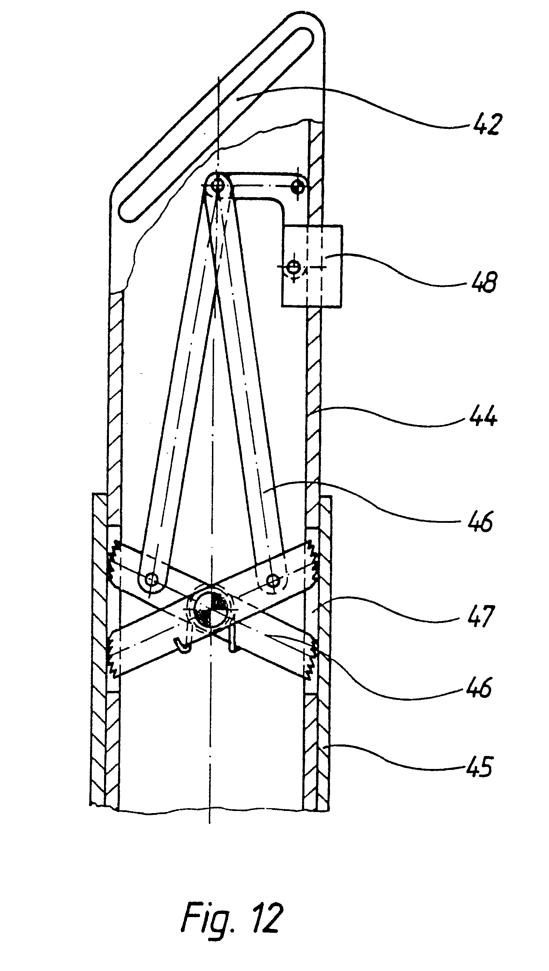

Ein Lösungsvorschlag hierfür ist in Figur 12 dargestellt, indem zwei ineinander verschiebliche Führungsrohre 44, 45 vorgesehen sind, von denen das obere und innere Rohr 44 Träger der Gurtführung 42 ist. Im Inneren des Rohres 44 ist eine scherenartige Verspanneinrichtung 46 angeordnet, welche das Rohr 44 in gegenüberliegenden Fenstern 47 durchgreift, sich an der Wandung des äußeren Rohres 45 abstützt und die Rohre so gegen ein gegenseitiges Verschieben sichert. Zur Betätigung der Verspanneinrichtung 46 ist am Rohr 44 eine Handhabe 48 angeordnet, mittels derer die Verspannung 46 gelöst und so das Rohr 44 mit Gurtführung 42 im Rohr 45 stufenlos höhenverschoben werden kann.

**Patentansprüche**

1. Sicherheitsgurtsystem, insbesondere für Kraftfahrzeuge, mit einem am Fahrzeugsitz gehaltenen Beckengurt (13), der mit einem Gurtschloßteil versehen ist, welches mit einem anderen, an einem kraftaufnehmend gehaltenen Verankerungsteil (16) sitzenden Gurtschloßteil zusammenwirkt, und mit einem Schultergurt (14) als Fortsetzung des Beckengurtes nach dessen Umlenkung am Gurtschloß (15), der unter Einschaltung eines Gurtaufrollers (17) mit einem fahrzeugfesten Teil verbunden ist, dadurch gekennzeichnet, daß das freie Ende des Beckengurtes (13) mit einem am Schultergurt (14) angreifenden Halte- oder Führungsgurt (18) zu einem am Fahrzeugsitz (10) angeordneten Gurtring zusammengeschlossen ist und daß an dem Gurtring eine Strammvorrichtung (20, 32, 40) zur Verkürzung der Umfangslänge des aus Beckengurt (13), Schultergurt (14) und Halte- oder Führungsgurt (18) gebildeten, die angeschnallte Person auf dem Sitz (10) rückhaltenden Gurtringes angreift.

2. Sicherheitsgurtsystem nach Anspruch 1, wobei der den Schultergurt einziehende Gurtaufroller an einem fahrzeugfesten Teil außerhalb des Fahrzeugsitzes befestigt ist, dadurch gekennzeichnet, daß der Halte- oder Führungsgurt (18) am Schultergurt (14) verschieblich angreift und an der Oberkante der Rückenlehne (12) des Sitzes (10) geführt ist.

3. Sicherheitgurtsystem nach Anspruch 2, dadurch gekennzeichnet, daß die jeweils freien Enden von Beckengurt (13) und Halte- oder Führungsgurt (18) mit den jeweils zueinander beweglichen Teilen (21, 22, 23) einer Strammvorrichtung (20) verbunden sind.

4. Sicherheitsgurtsystem nach Anspruch 3, dadurch gekennzeichnet, daß die Strammvorrichtung (20) in der Rückenlehne (12) des Fahrzeugsitzes (10) angeordnet ist und über ein Bowdenkabel (21) mit Beckengurt (13) und Halte- oder Führungsgurt (18) in einer fliegenden Anordnung verbunden ist, indem die gegenüber der Bowdenhülle (23) bewegliche Bowdenseele (22) mit dem Halte- oder Führungsgurt (18) und die Bowdenhülle (23) mit dem Beckengurt (13) fest verbunden ist.

5. Sicherheitsgurtsystem nach Anspruch 4, dadurch gekennzeichnet, daß als Stramm- bzw. Antriebsvorrichtung (20) eine am Fahrzeug im Auslösefall bewegliche Masse dient, welche über das Bowdenkabel (21) mit den zu strammenden Gurtteilen (13, 18) zusammenwirkt, wobei zum Ausgleich von Verschiebungen des Fahrzeugsitzes (10) eine Schleife (26) angeordnet ist.

6. Sicherheitsgurtsystem nach Anspruch 5, dadurch gekennzeichnet, daß als Auslösevorrichtung ein sonstiger, am Fahrzeug angeordneter Kraftspeicher vorgesehen ist.

7. Sicherheitsgurtsystem nach Anspruch 2, wobei das freie Ende des Beckengurtes auf einen im Fahrzeugsitz angeordneten Gurtaufroller ausziehbar aufgewickelt ist, dadurch gekennzeichnet, daß der Beckengurtaufroller (30) mit dem Halte- oder Führungsgurt (18) verbunden, mit einer auf die Gurtaufwickelwelle (31) wirkenden Strammvorrichtung (32) versehen und im übrigen in der Rückenlehne (12) des Sitzes (10) zwischen Beckengurt (13) und Halte- oder Führungsgurt (18) fliegend angeordnet ist.

8. Sicherheitsgurtsystem nach Anspruch 7, dadurch gekennzeichnet, daß der Beckengurt (13) mit seinem sitzseitigen Ende an einer im Sitz (10) gehalterten Rolle (30) befestigt ist und daß die Rolle (30) durch eine Strammbewegung (32) in Aufwickelrichtung drehbar ist.

9. Sicherheitsgurtsystem, insbesondere nach Anspruch 1 mit einem Beckengurt, der mit seinem einen Ende auf einem im Fahrzeugsitz angeordneten Gurtaufroller ausziehbar aufgewickelt ist und an seinem anderen Ende mit einem Gurtschloßteil versehen ist, welches mit einem anderen, über ein Verankerungsteil mit dem Fahrzeug verbundenen Gurtschloßteil zusammenwirkt, und mit einem Schultergurt als Fortsetzung des Beckengurtes nach dessen Umlenkung am Gurtschloß, der mit einem selbstsperrenden Gurtaufroller gekoppelt ist, dadurch gekennzeichnet, daß der selbstsperrende Gurtaufroller (17) für den Schultergurt (14) in der Rückenlehne (12) des Fahrzeugsitzes (10) angeordnet und daß ein Halte- oder Führungsgurt (18) einerseits mit dem Fahrzeugsitz (10) und andererseits mit einem fahrzeugfesten Teil fest verbunden ist.

10. Sicherheitsgurtsystem nach Anspruch 9, dadurch gekennzeichnet, daß die Verbindung des Halte- oder Führungsgurtes (18) mit dem Sitz (10) über eine Handhabe (36) lösbar ausgebildet ist.

11. Sicherheitsgurtsystem nach Anspruch 9 oder 10, dadurch gekennzeichnet, daß die Verbindung von Halte- oder Führungsgurt (18) und Rückenlehne (12) des Sitzes (10) in Form einer das Gurtband einfassenden Klemmvorrichtung (35) ausgebildet ist, wobei das im Sitz (10) geführte Ende des Halte- oder Führungsgurtes (18) auf einem Gurtaufroller (34) ausziehbar aufgewickelt ist.

12. Sicherheitsgurtsystem nach Anspruch 11, dadurch gekennzeichnet, daß die Klemmwirkung der Klemmvorrichtung (35) gemeinsam mit der Auslösung der Strammvorrichtung (32) auslösbar ist.

13. Sicherheitsgurtsystem nach Anspruch 9 oder 10, dadurch gekennzeichnet, daß der Halte- oder Führungsgurt (18) federnd und so steif ausgebildet ist, daß er in die Rückenlehne (12) des Sitzes (10) einschiebbar ist und daß eine durch eine Handbestätigung (36) lösbare Klemmvorrichtung (35) ständig am Gurt (18) angreift.

14. Sicherheitsgurtsystem nach Anspruch 13, dadurch gekennzeichnet, daß der Gurt (18) in den Dachholm des Kraftfahrzeuges einschiebbar ist.

15. Sicherheitsgurtsystem nach Anspruch 13 oder 14, dadurch gekennzeichnet, daß der Halte- oder Führungsgurt (18) eine entsprechend der Form der an ihm angreifenden Klemmvorrichtung (35) ausgestaltete Oberfläche (37) im Sinne eines bei Klemmung auftretenden Formschlusses aufweist.

16. Sicherheitsgurtsystem nach einem der Ansprüche 13 - 15, dadurch gekennzeichnet, daß der Halte- oder Führungsgurt (18) in einer die Sicht wenig behindernden Art ausgestaltet ist, insbesondere schmal oder aus durchscheinendem Material gefertigt ist oder Durchsichtöffnungen aufweist.

17. Sicherheitsgurtsystem nach einem der Ansprüche 9 - 16, dadurch gekennzeichnet, daß eine Strammvorrichtung (40) auf das Verankerungsteil (16) als Träger des Gurtschlosses (15) und der Umlenkung von Beckengurt (13) zu Schultergurt (14) einwirkt, indem das Verankerungsteil (16) im Auslösefall durch einen Umlenkblock (41) bewegbar ist.

18. Sicherheitsgurtsystem nach einem der Ansprüche 9 - 17, dadurch gekennzeichnet, daß der Beckengurtaufroller (30) und der Schultergurtaufroller (17) zu einer Baueinheit (39) zusammengefaßt sind, wobei ein fahrzeugsensitiver Sensor beide Gurtaufroller (17, 30) steuert und zur Strammung beider Aufroller (17, 30) eine auf beide Aufroller gleichermaßen wirkende Strammvorrichtung (32) vorgesehen ist.

19. Sicherheitsgurtsystem nach Anspruch 18, dadurch gekennzeichnet, daß die Baueinheit (39) von Beckengurtaufroller (30) und Schultergurtaufroller (17) zwischen Beckengurt (13) und Schultergurt (14) in der Rückenlehne (12) des Sitzes (10) fliegend angeordnet ist.

20. Sicherheitsgurtsystem nach einem der Ansprüche 1 - 19, dadurch gekennzeichnet, daß die Führungs- und Umlenkvorrichtung (42) für den Schultergurt (14) bzw. den Halte- oder Führungsgurt (18) beim Wegtritt von der Rückenlehne (12) des Sitzes (10) hin zum fahrzeugfesten Teil mit einer Kopfstütze (43) zusammenwirkend höhenverstellbar eingerichtet ist.

21. Sicherheitsgurtsystem nach einem der Ansprüche 1 - 20, dadurch gekennzeichnet, daß die Befestigung des Schultergurtaufrollers (17) bzw. des Beschlages (33) für den Halte- oder Führungsgurt (18) im Dachholm des Kraftfahrzeuges vorgenommen ist.

**Claims**

1. Safety belt system, particularly for motor vehicles, having a lap belt (13) secured to the vehicle seat and provided with a belt buckle member which cooperates with another belt buckle member located on an anchoring member (16) secured so as to absorb force, and having a shoulder belt (14) as a continuation of the lap belt after it has been guided around the belt buckle (15), said shoulder belt being connected, with the inclusion of a belt reeling means (17), to part of the vehicle characterised in that the free end of the lap belt (13) is linked together with a holding or guide belt (18) engaging the shoulder belt (14) to form a belt loop provided on the vehicle seat (10) and that a tightening apparatus (20, 32, 40) engages the belt loop for shortening the circumferential length of the belt loop which is formed of the lap belt (13), shoulder belt (14) and holding or guide belt (18) and which restrains the wearer on the seat (10).

2. Safety belt system according to claim 1, in which the belt reeling means which retract the shoulder belt are secured to a part secured to the vehicle outside the vehicle seat, characterised in that the holding or guide belt (18) slidably engages the shoulder belt and is guided over the upper edge of the back rest (12) of the seat (10).

3. Safety belt system according to claim 2, characterised in that the respective free ends of the lap belt (13) and the holding or guide belt (18) are respectively connected to the parts (21, 22, 23) of tightening apparatus (20) which are movable relative to one another.

4. Safety belt system according to claim 3, characterised in that the tightening apparatus (20) is provided in the back rest (12) of the vehicle seat (10) and connected to the lap belt (13) and the holding or guide belt (18) by means of a Bowden cable (21) in a floating arrangement, the Bowden control cable (22) which is movable relative to the Bowden sheath (23) being fixedly connected to the holding or guide belt (18) whilst the Bowden sheath (23) is fixedly connected to the lap belt (13).

5. Safety belt system according to claim 4, characterised in that a mass which when released is movable on the vehicle serves as the tightening or drive apparatus (20) and which cooperates via the Bowden cable (21) with the sections of belt (13, 18) to be tightened, a loop (26) being provided in order to compensate for any movement of the vehicle seat (10).

6. Safety belt system according to claim 5, characterised in that as a release device an energy store is provided on the vehicle.

7. Safety belt system according to claim 2, wherein the free end of the lap belt is wound on a belt reeling means provided in the vehicle seat so that said belt can be pulled out, characterised in that the lap belt reeling means (30) is connected to the holding or guide belt (18), is provided with a tightening means (32) which acts on the belt winding spindle (31) and is moreover disposed to float in the back rest (12) of the seat (10) between the lap belt (13) and the holding or guide belt (18).

8. Safety belt system according to claim 7, characterised in that the lap belt (13) is secured, by its end nearest the seat, to a roller (30) mounted in the seat (10) and the roller (30) is rotatable in the direction of winding up by means of a tightening movement (32).

9. Safety belt system, more particularly according to claim 1, having a lap belt which is wound at one end on a belt reeling means mounted in the vehicle seat, so that said belt can be pulled out, and is provided at its other end with a belt buckle member which cooperates with another belt buckle member connected to the vehicle by means of an anchorage member, and with a shoulder belt as a continuation of the lap belt after the latter has been guided round the belt buckle, which is coupled to a self-locking belt reeling means, characterised in that the self-locking belt reeling means (17) for the shoulder belt (14) is mounted in the back rest (12) of the vehicle seat (10) and a holding or guide belt (18) is fixedly connected on the one hand to the vehicle seat (10) and on the other hand to a part which is fixed to the vehicle.

10. Safety belt system according to claim 9, characterised in that the connection of the holding or guide belt (18) to the seat (10) is releasable by means of a handle (36).

11. Safety belt system according to claim 9 or 10, characterised in that the connection of the holding or guide belt (18) and the back rest (12) of the seat (10) is in the form of a clamping device (35) which traps the belt, the end of the holding or guide belt (18) guided in the seat (10) being wound on belt reeling means (34) so that it can be drawn out.

12. Safety belt system according to claim 11, characterised in that the clamping action of the clamping device (35) can be released at the same time as the tightening means (32) is released.

13. Safety belt system according to claim 9 or 10, characterised in that the holding guide belt (18) is of resilient construction and sufficiently rigid so that it can be inserted into the back rest (12) of the seat (10) and a clamping device (35) releasable by manual actuation (36) constantly acts on the belt (18).

14. Safety belt system according to claim 13, characterised in that the belt (18) can be inserted into the roof strut of the vehicle.

15. Safety belt system according to claim 13 or 14, characterised in that the holding or guide belt (18) has a surface (37) shaped to correspond to the clamping device (35) acting on it, so as to lock positively when clamping occurs.

16. Safety belt system according to one of claims 13 to 15, characterised in that the holding or guide belt (18) is constructed in a manner which interferes very little with visibility, and more particularly is of narrow construction or made of transparent material or has openings for looking through.

17. Safety belt system according to one of claims 9 to 16, characterised in that a tightening means (40) acts on the anchorage member (16) as the carrier of the belt buckle (15) and the turning point from lap belt (13) to shoulder belt (14), the anchorage member (16) being movable, in the event of release, though a guide block (41).

18. Safety belt system according to one of claims 9 to 17, characterised in that the lap belt reeling means (30) and the shoulder belt reeling means (17) are combined to form a structural unit (39), a vehicle-sensitive sensor controlling the two belt reeling means (17, 30) and in order to tighten both belt reeling means (17, 30), tightening means (32) is provided which acts equally on both reeling means.

19. Safety belt system according to claim 18, characterised in that the structural unit (39) consisting of lap belt reeling means (30) and shoulder belt reeling means (17) is disposed to float between the lap belt (13) and the shoulder belt (14) in the back rest (12) of the seat (10).

20. Safety belt system according to one of claims 1 to 19, characterised in that the guide and deflection means (42) for the shoulder belt (14) or for the holding or guide belt (18) in cooperation with a headrest (43) is arranged so as to be vertically adjustable, with movement away from the back rest (12) of the seat (10) towards the part fixed to the vehicle.

21. Safety belt system according to one of claims 1 to 12, characterised in that the fixing of the shoulder belt reeling means (17) or of the fitting (33) for the holding or guide belt (18) is effected in the roof strut of the vehicle.

**Revendications**

1. Système de ceinture de sécurité, notamment pour véhicules automobiles, avec une ceinture sous-abdominale (13), maintenue sur le siège du véhicule, qui est munie d'une partie de boucle de fermeture qui coopère avec une autre partie de boucle de fermeture montée sur une pièce d'ancrage (16) fixée de manière à absorber les forces exercées, et avec une ceinture diagonale (14) en prolongement de la ceinture sous-abdominale à la suite de son renvoi au niveau de la boucle de fermeture (15), qui est fixée à une pièce solidaire du véhicule avec interposition d'un enrouleur de ceinture (17), caractérisé en ce que l'extrémité libre de la ceinture sous-abdominale (13) est réunie en une ceinture annulaire avec une ceinture de maintien ou encore de guidage (18) appliquée sur la ceinture diagonale (14), et en ce qu'un dispositif tendeur (20, 32, 40) agit sur la ceinture annulaire afin de raccourcir la longueur de la ceinture annulaire — constituée de la ceinture sous-abdominale (13), de la ceinture diagonale (14) et de la ceinture de maintien ou encore de guidage (18) — qui retient sur le siège (10) la personne attachée.

2. Système de ceinture de sécurité selon la revendication 1, dans lequel l'enrouleur de ceinture agissant sur la ceinture diagonale est fixé à une pièce solidaire du véhicule en dehors du siège du véhicule, caractérisé en ce que la ceinture de maintien ou encore de guidage (18) est appliquée sur la ceinture diagonale (14) avec possibilité de coulissement, et est guidée le long du bord supérieur du dossier (12) du siège (10).

3. Système de ceinture de sécurité selon la revendication 2, caractérisé en ce que les extrémités libres respectives de la ceinture sous-abdominale (13) de la ceinture de maintien ou encore de guidage (18) sont assemblées aux pièces respectives (21, 22, 23), mobiles les unes relativement aux autres, d'un dispositif tendeur (20).

4. Système de ceinture de sécurité selon la revendication 3, caractérisé en ce que le dispositif tendeur (20) est disposé dans le dossier (12) du siège (10) du véhicule, et est relié de manière flottante, par l'intermédiaire d'un ensemble de câble Bowden (21) à la ceinture sous-abdominale (13) et à la ceinture de maintien ou encore de guidage (18), le câble Bowden (22) — mobile par rapport à la gaine de câble Bowden (23) — étant fixé à la ceinture de maintien ou encore de guidage (18), et la gaine de câble Bowden (23) étant fixée à la ceinture sous-abdominale (13).

5. Système de ceinture de sécurité selon la revendication 4, caractérisé en ce qu'une masse, fixée sur le véhicule et mobile en cas de déclenchement, sert de dispositif tendeur ou encore d'entraînement (20), laquelle coopère par l'intermédiaire de l'ensemble de câble Bowden (21) avec les parties de ceinture (13, 18) à tendre, une boucle (26) étant formée pour compenser les translations du siège (10) du véhicule.

6. Système de ceinture de sécurité selon la revendication 5, caractérisé en ce qu'il est prévu comme dispositif de déclenchement un autre type d'accumulateur de force disposé sur le véhicule.

7. Système de ceinture de sécurité selon la revendication 2, dans lequel l'extrémité libre de la ceinture sous-abdominale est enroulée, avec possibilité d'extension, sur un enrouleur de ceinture disposé dans le siège du véhicule, caractérisé en ce que l'enrouleur de ceinture sous-abdominale (30) est relié à la ceinture de maintien ou encore de guidage (18), est muni d'un dispositif tendeur (32) agissant sur l'arbre enrouleur de ceinture (31), et est disposé de manière flottante dans le dossier (12) du siège (10) entre la ceinture sous-abdominale (13) et la ceinture de maintien ou encore de guidage (18).

8. Système de ceinture de sécurité selon la revendication 7, caractérisé en ce que la ceinture sous-abdominale (13) est fixée par son extrémité côté siège sur un rouleau (30) maintenu dans le siège (10), et en ce que le rouleau (30) peut être mis en rotation dans le sens d'enroulement par un dispositif tendeur (32).

9. Système de ceinture de sécurité, notamment selon la revendication 1, avec une ceinture sous-abdominale qui, par une de ses extrémités, est enroulée — avec possibilité d'extension — sur un enrouleur de ceinture disposé dans le siège du véhicule, et qui est munie à son autre extrémité d'une partie de boucle de fermeture qui coopère avec une autre partie de boucle de fermeture reliée au véhicule par l'intermédiaire d'une pièce d'ancrage, et avec une ceinture diagonale en prolongement de la ceinture sous-abdominale à la suite de son renvoi à la boucle de fermeture, qui est accouplée à un enrouleur de ceinture autobloquant, caractérisé en ce que l'enrouleur de ceinture autobloquant (17) pour la ceinture diagonale (14) est disposé dans le dossier (12) du siège (10) du véhicule, et en ce qu'une ceinture de maintien ou encore de guidage (18) est fixée d'une part au siège du véhicule (10) et d'autre part à une pièce solidaire du véhicule.

10. Système de ceinture de sécurité selon la revendication 9, caractérisé en ce que l'assemblage de la ceinture de maintien ou encore de guidage (18) au siège (10) peut être déserré au moyen d'une manette (36).

11. Système de ceinture de sécurité selon la revendication 9 ou 10, caractérisé en ce que l'assemblage de la ceinture de maintien ou encore de guidage (18) et du dossier (12) du siège (10) est réalisé sous la forme d'un dispositif de serrage (35) entourant la sangle de ceinture, l'extrémité de la ceinture de maintien ou encore de guidage (18) qui est amenée dans le siège (10) étant enroulée — avec possibilité d'extension — sur un enrouleur de ceinture (34).

12. Système de ceinture de sécurité selon la revendication 11, caractérisé en ce que l'effet de serrage du dispositif de serrage (35) peut être déclenché conjointement avec le déclenchement du dispositif tendeur (32).

13. Système de ceinture de sécurité selon la revendication 9 ou 10, caractérisé en ce que la ceinture de maintien ou encore de guidage (18) est réalisée en un matériau élastique et d'une rigidité telle qu'elle peut être poussée dans le dossier (12) du siège (10), et en ce qu'un dispositif de serrage (35), qui peut être levé par un actionnement manuel (36), agit en permanence sur la ceinture (18).

14. Système de ceinture de sécurité selon la revendication 13, caractérisé en ce que la ceinture (18) peut être insérée dans le montant de toit du véhicule automobile.

15. Système de ceinture de sécurité selon la revendication 13 ou 14, caractérisé en ce que la ceinture de maintien ou encore de guidage (18) présente une surface (37) configurée conformément à la forme du dispositif de serrage (35) qui agit sur elle, afin d'obtenir, lors du serrage, une liaison par complémentarité de forme.

16. Système de ceinture de sécurité selon l'une des revendications 13 à 15, caractérisé en ce que la ceinture de maintien ou encore de guidage (18) est configurée d'une manière gênant peu la visibilité, notamment en la prévoyant étroite, en la réalisant en un metériau translucide, ou en la dotant d'ouvertures transparentes.

17. Système de ceinture de sécurité selon l'une des revendications 9 à 16, caractérisé en ce qu'un dispositif tendeur (40) agit sur la pièce d'ancrage (16) qui porte la boucle de fermeture (15) et le renvoi de la ceinture sous-abdominale (13) à la ceinture diagonale (14), la a pièce d'ancrage (16) pouvant, en cas de déclenchement, être déplacée par un bloc déflecteur (41).

18. Système de ceinture de sécurité selon l'une des revendications 9 à 17, caractérisé en ce que l'enrouleur de ceinture sous-abdominale (30) et l'enrouleur de ceinture diagonale (17) sont réunis en une même unité constructive (39), un capteur réagissant au véhicule commandant les deux enrouleurs de ceinture (17, 30), et un dispositif tendeur (32) agissant également sur les deux enrouleurs étant prévu pour tendre les deux enrouleurs.

19. Système de ceinture de sécurité selon la revendication 18, caractérisé en ce que l'unité constructive (39) constituée de l'enrouleur de ceinture diagonale (17) est disposée de manière flottante entre la ceinture sous-abdominale (13) et la ceinture diagonale (14) dans le dossier (12) du siège (10).

20. Système de ceinture de sécurité selon l'une des revendications 1 à 19, caractérisé en ce que le dispositif de guidage et de renvoi (42) pour la ceinture diagonale (14) et la ceinture de maintien ou encore de guidage (18) est prévu réglable en hauteur conjointement avec un appuie-tête (43), entre sa sortie du dossier (12) du siège (10) et la pièce solidaire du véhicule.

21. Système de ceinture de sécurité selon l'une des revendications 1 à 20, caractérisé en ce que l'enrouleur de ceinture diagonale (17) ou selon le cas, la ferrure de fixation (33) pour la ceinture de maintien, ou encore de guidage (18) est fixé(e) dans le montant de toit du véhicule automobile.

**Fig. 1**

Fig. 2

**Fig. 3**

Fig. 4

Fig. 5

Fig. 6

Fig. 7

*Fig. 8*

*Fig. 9*

Fig. 10

Fig. 11

*Fig. 12*